# EUROPÄISCHE PATENTSCHRIFT

(11) **EP 0 935 728 B1**
(45) Veröffentlichungstag und Bekanntmachung des Hinweises auf die Patenterteilung: **26.05.2004**
(21) Anmeldenummer: 98947500.9
(22) Anmeldetag: 02.09.1998
(51) Int. Cl.: F21V 11/16, F21V 14/08, B60Q 1/12

(54) **SCHEINWERFER FÜR FAHRZEUGE**
HEADLIGHT FOR VEHICLES
PROJECTEUR POUR VEHICULES

(30) Priorität: 06.09.1997 DE 19739089
(43) Veröffentlichungstag der Anmeldung: 18.08.1999
(73) Patentinhaber: Hella KG Hueck & Co., 59552 Lippstadt (DE)
(72) Erfinder: EICHHORN, Karsten, D-59320 Ennigerloh (DE); KALZE, Franz-Josef, D-33428 Harsewinkel (DE); TOPP, Ewald, D-59629 Anröchte (DE)
(86) Internationale Anmeldenummer: PCT/EP1998/005553
(87) Internationale Veröffentlichungsnummer: WO 1999/013265

(56) Entgegenhaltungen:
- EP-A- 0 761 497
- JP-A- 7 029 403
- PATENT ABSTRACTS OF JAPAN vol. 095, no. 004, 31. Mai 1995 & JP 07 021803 A (TOYOTA MOTOR CORP), 24. Januar 1995

## Beschreibung

Die Erfindung betrifft einen Scheinwerfer für Fahrzeuge mit einem zwei Brennorte aufweisenden schalenförmigen Reflektor und mit einer zwischen einer Linse und dem Reflektor angeordneten Blendenwelle, welche um eine horizontal und quer zur optischen Achse verlaufende Drehachse in mehrere Drehstellungen verstellbar ist und deren Mantelfläche für jede Drehstellung eine Brennlinie aufweist, welche eine Hell-Dunkel-Grenze einer Lichtfigur erzeugen.

Ein solcher Scheinwerfer für Fahrzeuge ist aus der DE-A-43 35 286 und der EP-A-0 761 497 bekannt und weist ein Lichtsystem auf, welches im wesentlichen aus einem ellipsoidförmigen Reflektor, einer im inneren Brennort des Reflektors angeordneten Lichtquelle, einer das Licht sammelnden Linse und einer zwischen Reflektor und Linse angeordneten drehbaren Blendenwelle besteht. Als Lichtquelle kann eine Gasentladungslampe dienen. Die drehbare Blendenwelle ist mindestens mit einem Antriebsmittel gekoppelt. Die Drehachse der Blendenwelle verläuft horizontal und quer zur optischen Achse des Lichtsystems und ist exzentrisch zu zylindrischen Mantelflächenabschnitten der Blendenwelle angeordnet. Die zylindrischen Mantelflächenabschnitte der Blendenwelle sind so versetzt zueinander angeordnet, daß die Blendenwelle eine umlaufende Stufe aufweist. Durch das Antriebsmittel ist die Blendenwelle in mehrere Drehstellungen drehbar. In jeder Drehstellung bildet die Mantelfläche in ihrem oberen Bereich eine Brennlinie, welche eine Hell-Dunkel-Grenze einer Lichtfigur erzeugt. Wegen der exzentrisch angeordneten Drehachse verlaufen in jeder Drehstellung der Blendenwelle die Brennlinien auf unterschiedlichem Höhenniveau. Somit ist in mehreren Drehstellungen der Blende ein asymmetrisches Abblendlicht gegeben. Nur in einer einzigen Drehstellung der Blendenwelle ist eine in ihrer gesamten Länge in einer Horizontalebene verlaufende, optisch wirksame Brennlinie und somit nur ein einziges symmetrisches Lichtbündel möglich. Des weiteren können die Brennlinien wegen der zylindrischen Mantelflächenabschnitte der Blendenwelle nicht wie bei einer ortsfesten Blendenplatte einen beliebigen Verlauf einnehmen. Weiterhin ist es nachteilig, daß die Brennlinien, bis auf eine einzige Brennlinie, in ihrer aktiven Lage zu einem Brennbereich der Linse unterschiedlich weit beabstandet sind, da eine exzentrische Lage der Drehachse zu den zylindrischen Mantelflächen der Blendenwelle besteht. Lediglich die durch den oder nahe dem Brennbereich der Linse verlaufende Brennlinie erzeugt eine scharfe Hell-Dunkel-Grenze, während die anderen Brennlinien eine unscharfe Hell-Dunkel-Grenze ergeben. Die Unschärfe der Hell-Dunkel-Grenze nimmt zu, je größer die Brennlinie von dem Brennbereich der Linse beabstandet ist. Eine unscharfe Hell-Dunkel-Grenze ist bei Abblendlicht wegen der Blendgefahr des Gegenverkehrs unerwünscht.

Aus der DE 44 36 684 A1 ist ein Scheinwerfer für Fahrzeuge bekanntgeworden, bei dem zusätzlich zu dem eine Blendenwelle aufweisenden Lichtsystem ein weiteres Lichtsystem für Fernlicht in den Scheinwerfer integriert ist. Da für die Fernlichtfunktion ein zusätzliches Lichtsystem notwendig ist, baut der Scheinwerfer sehr groß, und seine Herstellung ist teuer.

Bei dem aus der EP 0 723 108 A1 bekanntgewordenen Scheinwerfer ist eine zwei Blendenkanten für asymmetrisches Abblendlicht aufweisende Blendenplatte um eine Drehachse verschwenkbar, während für Fernlicht zusätzlich eine in einem Abstand zu der Blendenplatte angeordnete ortsfeste Blende notwendig ist. Die Blendenplatte für Abblendlicht verläuft in ihrer Drehstellung für Fernlicht in einer Horizontalebene. Hierbei ist es nachteilig, daß nur zwei verschiedene Abblendlichtbündel möglich sind und beim Umschalten der Blendenplatte zwischen den beiden Abblendlichtfunktionen für eine kurze Zeit der Gegenverkehr durch das sehr weit reichende Fernlicht geblendet ist.

Aus der JP-A-07 29403 ist ein Scheinwerfer für Fahrzeuge bekannt, dessen Blendenwelle aus zwei separaten Wellenabschnitten besteht um unterschiedliche Lichtbündel erzeugen zu können. Die separaten Wellenabschnitte weisen eine gemeinsame Drehachse auf und sind durch zwei Antriebsmittel selektiv ansteuerbar und um die Drehachse verstellbar. Sämtliche Brennlinien der Blendenwellen sind asymmetrisch zu einer in Lichtaustrittsrichtung verlaufenden vertikalen Fläche. Deshalb erzeugen alle Brennlinien ein asymmetrisches Lichtbündel, wobei die Hell-Dunkel-Grenzen der möglichen Lichtfiguren nur parallel verschobene Abschnitte aufweisen. Obwohl sämtliche Brennlinien einen ähnlichen Verlauf aufweisen ist offenbar nicht mit den diese Brennlinien definierenden Mantelflächen der Wellenabschnitte eine einteilige Blendenwelle herstellbar. Während eines Verstellens der Wellenabschnitte in eine andere Schaftstellung können zwischen den angrenzenden Rändern der Wellenabschnitte unerwünschte Stufen entstehen. Dadurch besteht dann zwischen zwei Schattsteltungen kein stetiger Übergang an der Hell-Dunkel-Grenze des aus dem Scheinwerfer austretenden Lichtbündels. Außerdem ist die zweiteilige Blendenwelle teuer in der Herstellung und zur Ansteuerung für die unterschiedlichen Drehstellungen der Blendenwelle zwei Antriebe notwendig.

Bei dem aus der JP-A-07 0211803 bekannten Scheinwerfer ist eine einteilige Blendenwelle durch ein erstes Antriebsmittel in ihre Drehstellung und durch ein zweites Antriebsmittel in Richtung der Drehachse der Blendenwelle verstellbar.

Aufgabe der Erfindung ist es, den im Oberbegriff des Anspruchs 1 beschriebenen Scheinwerfer für Fahrzeuge derart zu gestalten, daß jede Brennlinie der einteiligen Blendenwelle einen beliebigen und genau auf die jeweilige Lichtfigur abgestimmten Verlauf aufweisen kann. Diese Aufgabe wird nach der Erfindung durch die Merkmale des kennzeichnenden Teils des Anspruchs 1 gelöst. Dadurch kann die Blendenwelle zwei symmetrische Lichtfiguren (z. B. für Nebellicht und Fernlicht) erzeugende Brennlinien und mehrere asymmetrisches Abblendlicht erzeugende Brennlinien aufweisen. Die Brennlinien für symmetrisches Abblendlicht können konkav oder geradlinig verlaufen, während die Brennlinien für Abblendlicht schräg oder beliebig gekrümmt verlaufen können. Weiterhin kann die Blendenwelle so ausgelegt sein, daß die Drehachse durch den Massenschwerpunkt oder nahe dem Massenschwerpunkt der Blendenwelle verläuft und somit für die Blendenwelle keine Ausgleichsgewichte notwendig sind. Der Abstand der meisten Brennlinien zu der Drehachse kann wesentlich kleiner ausgeführt sein als bei einer bekannten Blendenwelle mit zylindrischen Mantelflächenabschnitten. Somit ist die Masse der Blendenwelle kleiner als bei der bekannten Blendenwelle. Bei einer Blendenwelle mit einer geringen Masse können auch die Antriebsmittel entsprechend klein dimensioniert sein.

Eine Blendenwelle, welche mit Brennlinien versehen ist, die in ihrem Verlauf sehr unterschiedlich sind, weist eine Mantelfläche mit vielen unregelmäßig verlaufenden Flächenabschnitten auf. Die Flächenabschnitte können beliebig, z. B. konvex oder eben, ausgeführt sein.

Bei einer besonders vorteilhaften Weiterbildung der Erfindung sind mindestens eine Brennlinie symmetrisch und mindestens-zwei Brennlinien asymmetrisch zu einer in Lichtaustrittsrichtung verlaufenden vertikalen Fläche, wobei die Brennlinien in ihrer optisch wirksamen Stellung in einer vertikal verlaufenden Fläche liegen, in welcher die Drehachse verläuft. Dadurch grenzen die Brennlinien in ihrer optisch wirksamen Stellung an den Brennbereich der Linse an und ergeben somit eine scharfe Hell-Dunkel-Grenze, durch die die Bleridüng des Gegenverkehrs so weit wie möglich gemindert ist.

Eine Blendenwelle, die mit mindestens zwei Brennlinien für symmetrisches und mindestens zwei Brennlinien für asymmetrisches Licht versehen ist, weist eine geringe Masse auf, wenn die symmetrischen und asymmetrischen Brennlinien jeweils benachbart zueinander verlaufen. Hierbei ist es zweckmäßig, wenn eine symmetrische und asymmetrische Brennlinie in einer gemeinsamen Fläche liegen, in welcher die Drehachse verläuft, und bei vier Lichtfunktionen zwei dieser Flächen senkrecht zueinander stehen.

Eine störende Reflexion von Lichtstrahlen an der Blendenwelle ist ausgeschaltet, wenn das Reflexionsvermögen der Mantelfläche der Blendenwelle gegenüber Lichtstrahlen, die von einer Lichtquelle des Scheinwerfers ausgehen, kleiner als 40 % ist.

Ausführungsbeispiele nach der Erfindung sind in der Zeichnung dargestellt, und zwar zeigen:

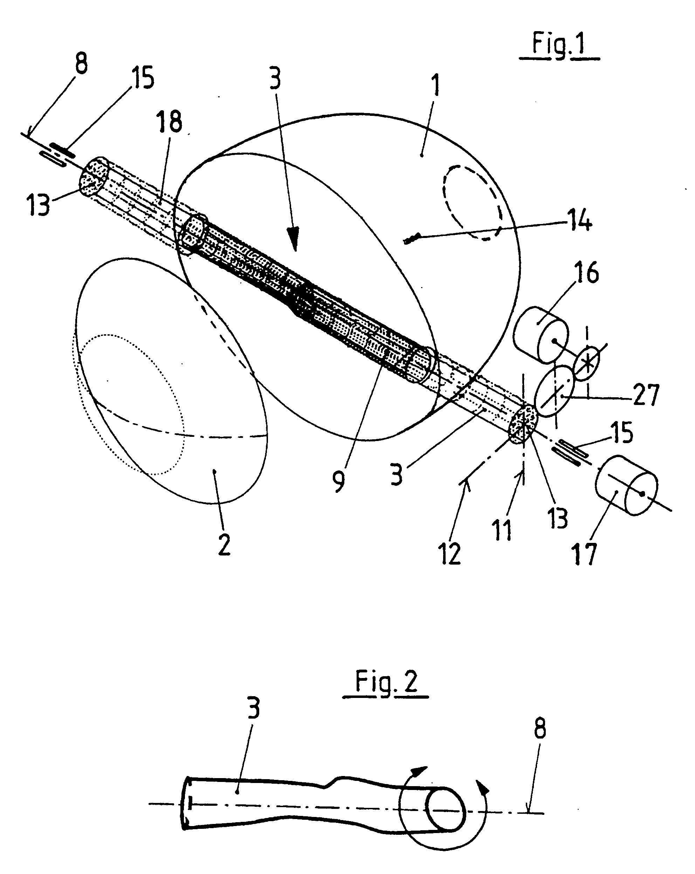

Figur 1 in einer perspektivischen Ansicht ein Lichtsystem eines Scheinwerfers für Fahrzeuge im Prinzip, welches im wesentlichen aus einem Reflektor, einer Linse und einer Blendenwelle mit Antriebsmitteln besteht;
Figur 2 die Blendenwelle der Figur 1 als Einzelteil;

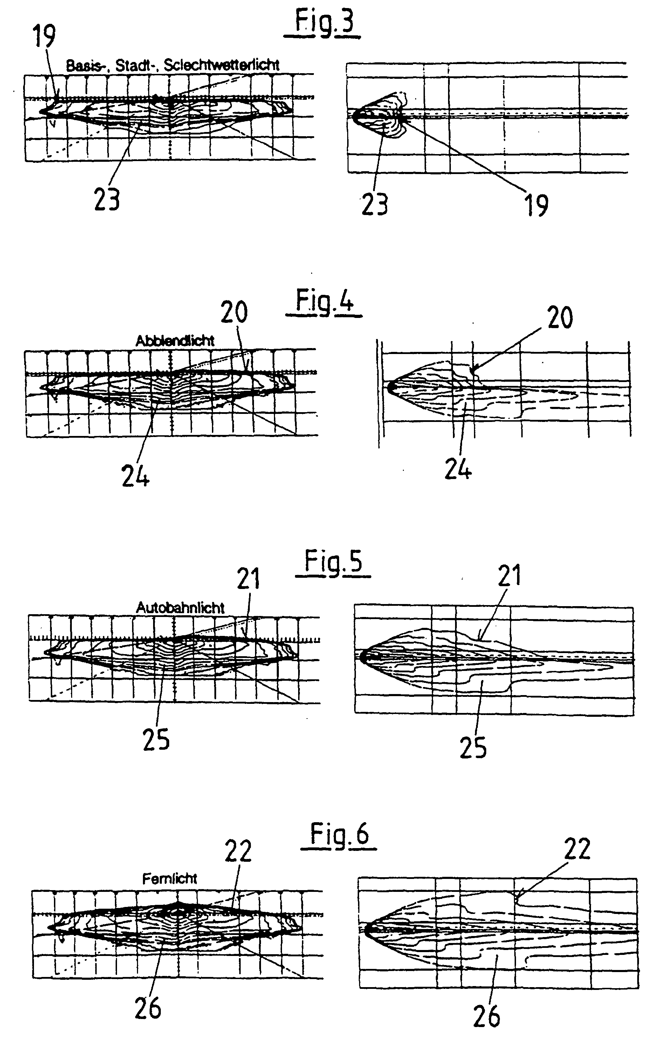

Figur 3 eine Lichtfigur für Basis-, Stadt- oder Schlechtwetterlicht auf einer senkrecht stehenden Wand und auf der Fahrbahn;
Figur 4 eine Lichtfigur für Abblendlicht auf einer senkrecht stehenden Meßwand und auf der Fahrbahn;
Figur 5 eine Lichtfigur für Autobahnlicht auf einer senkrecht stehenden Meßwand und auf der Fahrbahn;
Figur 6 eine Lichtfigur für Fernlicht auf einer senkrecht stehenden Meßwand und auf der Fahrbahn;

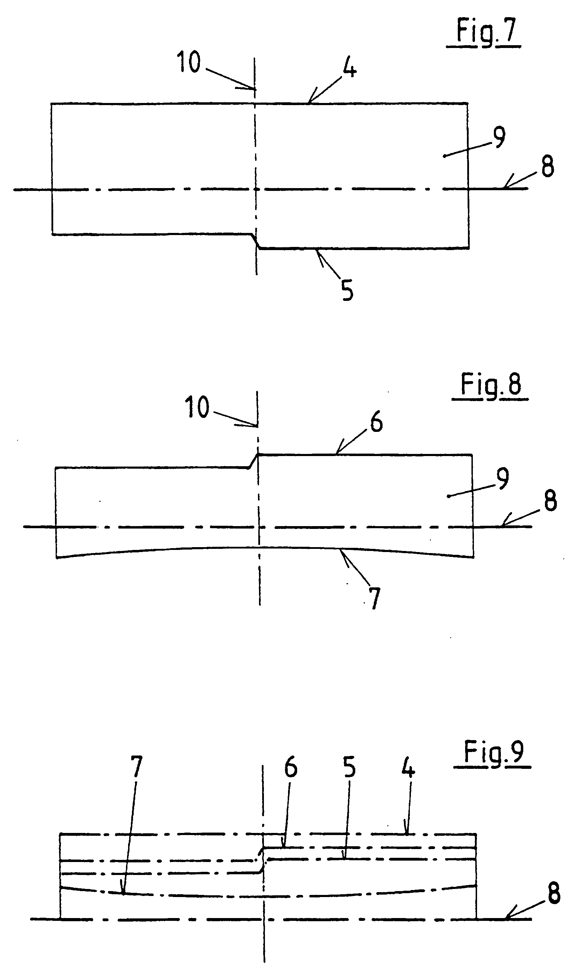

Figur 7 und 8 eine Ansicht der Blendenwelle in Richtung der optischen Achse mit einer Brennlinie für symmetrisches und einer Brennlinie für asymmetrisches Licht und
Figur 9 vier Brennlinien der Blendenwelle in ihrer optisch wirksamen Lage, während die Figuren 10 und 11 Brennlinien einer anderen Blendenwelle darstellen und Figur 12 eine Querschnittsfläche einer Blendenwelle mit fünf Brennlinien zeigt.

Ein Scheinwerfer für Fahrzeuge weist ein Lichtsystem auf, das im wesentlichen aus einem ellipsoidförmigen Reflektor (1), einer Lichtquelle (14), einer vor dem Reflektor angeordneten Linse (2) und einer mit Antriebsmitteln (16 und 17) gekoppelten Blendenwelle (3) besteht. Die von dem Lichtbogen einer nicht dargestellten Gasentladungslampe gebildete Lichtquelle (14) ist in dem inneren Brennort des ellipsoidförmigen Reflektors (1) angeordnet. Die Blendenwelle (3) ist durch das erste Antriebsmittel (16) über ein Getriebe (27) um die Drehachse (8) in vier Drehstellungen verstellbar. Die Blendenwelle (3) ist mit seitlich abstehenden Lagerelementen, welches nicht dargestellte Lagerzapfen sind, in Lagerhalter (15) eingesetzt. Das zweite Antriebsmittel (17) dient zur translatorischen Verstellung der Blendenwelle (3). Die Drehachse (8) der Blendenwelle (6) verläuft horizontal und quer zur optischen Achse des Reflektors (1). Die Blendenwelle (9), welche in vier Drehstellungen bringbar ist, bildet in jeder Drehstellung eine optisch wirksame Brennlinie (4, 5, 6 bzw. 7). Die erste und zweite Brennlinie (4 und 5) liegen gemeinsam in einer Fläche (11) und die dritte und vierte Brennlinie (6 und 7) in einer gemeinsamen Fläche (12). Die Flächen (11 und 12) verlaufen senkrecht zueinander, und deren Schnittlinie fällt mit der Drehachse (8) zusammen. Die erste Brennlinie (4) erzeugt die Hell-Dunkel-Grenze (19) eines symmetrischen Abblendlichtes, welches als Basis-, Stadt- oder Schlechtwetterlicht (Lichtfigur 23) zu bezeichnen ist und ausschließlich den nahen Bereich der Fahrbahn vor dem Fahrzeug ausleuchtet. Die zweite Brennlinie (6) erzeugt die Hell-Dunkel-Grenze (20) für das übliche asymmetrische Abblendlicht (Lichtfigur 24), bei dem die eigene Fahrbahnseite wesentlich weiter ausgeleuchtet ist als die Gegenfahrbahnseite. Die zweite Brennlinie (5) erzeugt die Hell-Dunkel-Grenze (21) eines asymmetrischen Autobahnlichts (Lichtfigur 25). Hierbei ist die eigene Fahrbahnseite, ebenso wie beim üblichen asymmetrischen Abblendlicht, weitreichend ausgeleuchtet, während die benachbarte Fahrbahnseite weiter ausgeleuchtet ist als beim üblichen asymmetrischen Abblendlicht. Die Brennlinie (7) erzeugt die Hell-Dunkel-Grenze (22) eines symmetrischen Fernlichts (Lichtfigur 26).

Die Brennlinien (4, 5, 6 und 7) weisen einen unterschiedlichen Verlauf auf, und zwar verläuft die erste Brennlinie (4) geradlinig und in einem äquidistanten Abstand zur Drehachse (6), die zweite und dritte Brennlinie (5 und 6) mit einem Brennlinienabschnitt schräg zur Drehachse und mit dem anderen Brennlinienabschnitt in einem äquidistanten Abstand zur Drehachse (8) und die vierte Brennlinie (7) in einem konkaven Bogen. Die Brennlinien (4, 5, 6 und 7) sind durch Freiform-Mantelflächenabschnitte bzw. unregelmäßig verlaufende Flächenabschnitte (9), welche von dem Verlauf einer Zylinderfläche abweichen, verbunden. Die Flächenabschnitte (9) sind zum größten Teil konvex ausgeführt und können mindestens an einer der Brennlinien (4, 5, 6 und 7) in einer Kante auslaufen. Die zur Verstellung der Blendenwelle (3) dienenden Antriebsmittel (16 und 17) können z. B. von einem Gleichstrom bzw. Schrittmotor gebildet sein.

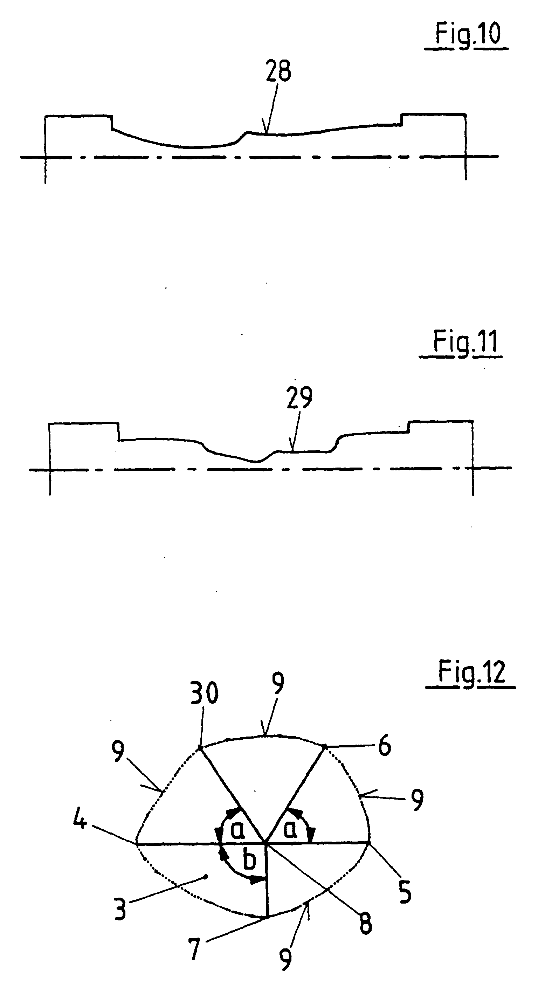

Die Figuren 10 und 11 zeigen Brennlinien 28 und 29 einer anderen Blendenwelle. Die Brennlinie 28 erzeugt die Hell-Dunkel-Grenze eines asymmetrischen Abblendlichts mit einer zusätzlichen Reichweite auf der Gegenfahrbahnseite, während die Brennlinie 29 die Hell-Dunkel-Grenze eines asymmetrischen Abblendlichts mit begrenzter Seitenausleuchtung der Fahrbahn erzeugt.

Unterhalb der Blendenwelle (3) kann ein plattenförmiger Abschatter an dem Reflektor (1) angebracht sein, welcher mit seinem oberen Randabschnitt zur Blendenwelle (3) beabstandet ist und in Lichtaustrittsrichtung gesehen vor oder hinter der Blendenwelle (3) angeordnet ist. Somit sind in jeder Drehstellung der Blendenwelle (3) die unterhalb der jeweils optisch wirksamen Brennlinie (4, 5, 6 und 7) verlaufenden Lichtstrahlen bis zum unteren Rand des Abschatters abgeschirmt. Hierbei ist es vorteilhaft, wenn der untere Rand des Abschatters in seiner gesamten Länge zu dem vorderen Rand des Reflektors (1) benachbart verläuft bzw. an dem vorderen Rand des Reflektors (1) anliegt.

Die Blendenwelle (3) in Figur 12 weist zusätzlich zu den Brennlinien 4, 5, 6 und 7 die fünfte Brennlinie (30) für symmetrisches Abblendlicht auf. Die Drehstellung der Blende (3) für symmetrisches Abblendlicht macht dann Sinn, wenn z.B. ein Fahrzeug für Rechtsverkehr vorübergehend in ein Land mit Linksverkehr kommt. In dem Land für Linksverkehr sind die eine asymmetrische Lichtfigur ergebenden Brennlinien 5 und 6 gesetzlich verboten, da mit diesem Licht der Gegenverkehr sehr stark geblendet würde. Ein Schalten zwischen der Brennlinie 4 für Nebellicht und der Brennlinie (7) für Fernlicht erfolgt immer über die Brennlinien (30, 6 und 5). Die Brennlinien (5 und 4) liegen in einer Fläche, in welcher die unterhalb zur optischen Achse angeordnete Drehachse (8) verläuft. Die Brennlinien (30 und 6) verlaufen jeweils mit der Drehachse (8) in einer Fläche, welche in einem spitzen Winkel a zur Fläche verläuft, in der die Brennlinien (4 und 5) liegen. Der spitze Winkel a ist ca. 60° groß. Die Fläche, in welcher die Brennlinie (7) für Fernlicht und die Drehachse (8) verläuft, steht annähernd in einem rechten Winkel zu der Fläche, in welcher die Brennlinien (4 und 5) verlaufen. Die Flächenabschnitte (9) zwischen den Brennlinien (4, 30, 6, 5 und 7) verlaufen konkav.

### Bezugszeichenliste

- 1: Reflektor
- 2: Linse
- 3: Blendenwelle
- 4: erste Brennlinie (für Schlechtwetterlicht)
- 5: zweite Brennlinie (für Autobahnlicht)
- 6: dritte Brennlinie (für Abblendlicht)
- 7: vierte Brennlinie (für Fernlicht)
- 8: Drehachse
- 9: Flächenabschnitt
- 10: Fläche
- 11: Fläche
- 12: Fläche
- 13: Ende
- 14: Lichtquelle
- 15: Lagerhalter
- 16: erstes Antriebsmittel
- 17: zweites Antriebsmittel
- 18: Zylinderfläche
- 19: Hell-Dunkel-Grenze (des Schlechtwetterlichts)
- 20: Hell-Dunkel-Grenze (des Abblendlichts)
- 21: Hell-Dunkel-Grenze (des Autobahnlichts)
- 22: Hell-Dunkel-Grenze (des Fernlichts)
- 23: Lichtfigur (des Schlechtwetterlichts)
- 24: Lichtfigur (des Abblendlichts)
- 25: Lichtfigur (des Autobahnlichts)
- 26: Lichtfigur (des Fernlichts)
- 27: Getriebe
- 28: Brennlinie
- 29: Brennlinie
- 30: fünfte Brennlinie (symmetrisches Abblendlicht)

## Patentansprüche

1. Scheinwerfer für Fahrzeuge mit einem zwei Brennorte aufweisenden schalenförmigen Reflektor (1) und mit einer zwischen einer Linse (2) und dem Reflektor (1) angeordneten Blendenwelle (3), welche um eine horizontale und quer zur optischen Achse verlaufende Drehachse (8) in mehrere Drehstellungen verstellbar ist und deren Mantelfläche für jede Drehstellung eine Brennlinie (4, 5, 6 oder 7) aufweist, welche eine Hell-Dunkel-Grenze (19, 20, 21 bzw. 22) einer Lichtfigur (23, 24, 25 bzw. 26) erzeugt, wobei die Mantelfläche der Blendenwelle (3) mindestens in einem zwei Brennlinien (4, 5, 6 oder 7) verbindenden Flächenabschnitt (9) gegenüber einer Zylinderfläche (18) abweichend und unregelmäßig verläuft **dadurch gekennzeichnet, daß** die Blendenwelle einteilig ist, und unterhalb der Blendenwelle (3) ein Abschatter angeordnet ist, welcher mit seinem oberen Randabschnitt zur Blendenwelle (3) benachbart verläuft und in Lichtaustrittsrichtung gesehen zusammen mit der Blendenwelle (3) eine durchgehende Abschirmeinrichtung für Lichtstrahlen einer Lichtquelle (14) des Scheinwerfers ist.

2. Scheinwerfer nach Anspruch 1, **dadurch gekennzeichnet, daß** die Blendenwelle (3) mehrere Brennlinien (4, 5 und 6) für Abblendlicht und mindestens eine Brennlinie (7) für Fernlicht aufweist, wobei die Brennlinie (7) für Fernlicht einen kleineren Abstand zur Drehachse (8) aufweist als jede der Brennlinien (4, 5 und 6) für Abblendlicht und die Brennlinie (7) für Fernlicht symmetrisch und die Brennlinien für Abblendlicht asymmetrisch zu einer in Lichtaustrittsrichtung verlaufenden vertikalen Fläche (10) sind.

3. Scheinwerfer nach Anspruch 1 oder 2, **dadurch gekennzeichnet, daß** mindestens ein unregelmäßig verlaufender Flächenabschnitt (9) in Umfangsrichtung der einteiligen Blendenwelle (3) konvex ausgeführt ist.

4. Scheinwerfer nach einem der Ansprüche 1 bis 3, **dadurch gekennzeichnet, daß** mindestens ein unregelmäßiger Flächenabschnitt (9) schräg zur Drehachse (8) den einteiligen Blendenwelle (3) verläuft.

5. Scheinwerfer nach einem der Ansprüche 1 bis 4, **dadurch gekennzeichnet, daß** mindestens eine Brennlinie (4 bzw. 7) symmetrisch und mindestens zwei Brennlinien (5 und 6) asymmetrisch zu einer in Lichtaustrittsrichtung verlaufenden vertikalen Fläche (10) sind, wobei die Brennlinien (4, 5, 6 und 7) in ihrer optisch wirksamen Stellung in einer vertikal verlaufenden Fläche (11 bzw. 12) liegen, in welcher die Drehachse (8) verläuft.

6. Scheinwerfer nach einem der Ansprüche 1 bis 5, **dadurch gekennzeichnet, daß** mindestens zwei Brennlinien (4 und 7) symmetrisch und mindestens zwei Brennlinien (5 und 6) asymmetrisch ausgeführt sind, wobei die symmetrischen und asymmetrischen Brennlinien jeweils benachbart zueinander angeordnet sind.

7. Scheinwerfer nach Anspruch 5 oder 6, **dadurch gekennzeichnet, daß** eine symmetrische und asymmetrische Brennlinie (4 und 5 bzw. 7 und 6) in einer gemeinsamen Fläche (11 bzw. 12) liegen, in welcher die Drehachse (8) verläuft.

8. Scheinwerfer nach Anspruch 7, **dadurch gekennzeichnet, daß** zwei Flächen (11 und 12), in welchen jeweils eine symmetrische und asymmetrische Brennlinie (4 und 5 bzw. 7 und 6) verläuft, senkrecht zueinander stehen.

## Claims

1. Headlamp for vehicles, comprising a dished reflector (1) having two foci and comprising a shutter shaft (3) arranged between a lens (2) and the reflector (1), which shutter shaft (3) is adjustable to a plurality of rotational positions about an axis of rotation (8) disposed horizontally and transversely to the optical axis of rotation (8) and the generated surface of which has a focal line (4, 5, 6 or 7) which generates a bright-dark boundary (19, 20, 21, 22) of a light figure (23, 24, 25, 26), the generated surface of the shutter shaft (3) being disposed in a manner deviating from a cylindrical surface (18) and irregularly at least in a surface section (9) connecting two focal lines (4, 5, 6 or 7), **characterised in that** the shutter shaft is formed in one piece and a shielding element is arranged below the shutter shaft (3), the upper edge portion of which shielding element is disposed adjacent to the shutter shaft (3) and forms together with the shutter shaft (3) a continuous screening device for light rays of a light source (14) of the headlamp in the outgoing light direction.

2. Headlamp according to claim 1, **characterised in that** the shutter shaft (3) has a plurality of focal lines (4, 5 and 6) for dipped beam and at least one focal line (7) for main beam, the focal line (7) for main beam being located at a smaller distance from the axis of rotation (8) than each of the focal lines (4, 5 and 6) for dipped beam and the focal line (7) for main beam being symmetrical and the focal lines for dipped beam being asymmetrical with respect to a vertical plane (10) disposed in the outgoing light direction.

3. Headlamp according to claim 1 or 2, **characterised in that** at least one irregularly disposed surface section (9) is convex in the circumferential direction of the one-piece shutter shaft (3).

4. Headlamp according to any one of claims 1 to 3, **characterised in that** at least one irregular surface section (9) is disposed obliquely with respect to the axis of rotation (8) of the one-piece shutter shaft (3).

5. Headlamp according to any one of claims 1 to 4, **characterised in that** at least one focal line (4, 7) is disposed symmetrically and at least two focal lines (5 and 6) are disposed asymmetrically with respect to a vertical plane (10) disposed in the outgoing light direction, the focal lines (4, 5, 6 and 7) being located in their optically effective position in a vertically disposed plane (11, 12) in which the axis of rotation (8) is disposed.

6. Headlamp according to any one of claims 1 to 5, **characterised in that** at least two focal lines (4 and 7) are configured symmetrically and at least two focal lines (5 and 6) are configured asymmetrically, the symmetrical and the asymmetrical focal lines being in each case arranged adjacent to one another.

7. Headlamp according to claim 5 or 6, **characterised in that** a symmetrical and an asymmetrical focal line (4 and 5, 7 and 6) are located in a common plane (11,12) in which the axis of rotation (8) is disposed.

8. Headlamp according to claim 7, **characterised in that** two planes (11 and 12) in which a symmetrical and an asymmetrical focal line (4 and 5, 7 and 6) are disposed in each case are perpendicular to one another.

## Revendications

1. Phare pour véhicules, comportant un réflecteur (1) en forme de coque présentant deux foyers et comportant un arbre de diaphragme (3) agencé entre une lentille (2) et le réflecteur (1), lequel est réglable autour d'un axe de rotation (8) s'étendant à l'horizontale et transversalement à l'axe optique et dont la surface enveloppe présente pour chaque position de rotation une ligne focale (4, 5, 6 ou 7) qui produit une limite de clair-obscur (19, 20, 21 ou 22) d'une figure lumineuse (23, 24, 25 ou 26), la surface enveloppe de l'arbre de diaphragme (3) s'étendant irrégulièrement et en divergeant par rapport à une surface cylindrique, au moins dans un tronçon de surface (9) reliant deux lignes focales (4, 5, 6 ou 7), **caractérisé en ce que** l'arbre de diaphragme (3) est d'un seul tenant et **en ce qu'**en dessous de l'arbre de diaphragme (3) est agencé un élément d'obturation qui s'étend avec son tronçon de bord supérieur au voisinage de l'arbre de diaphragme (3) et, vu en direction de sortie de la lumière, constitue conjointement avec l'arbre de diaphragme (3) un dispositif d'occultation continu pour les rayons lumineux d'une source de lumière (14) du phare.

2. Phare selon la revendication 1, **caractérisé en ce que** l'arbre de diaphragme (3) présente plusieurs lignes focales (4, 5 et 6) pour les feux de croisement et au moins une ligne focale (7) pour les feux de route, la ligne focale pour les feux de route présentant une distance plus petite par rapport à l'axe de rotation (8) que chacune des lignes focales (4, 5 et 6) pour les feux de croisement, et **en ce que** la ligne focale (7) pour les feux de route est symétrique et les lignes focales pour les feux de croisement sont asymétriques à une surface (10) verticale s'étendant en direction de sortie de la lumière.

3. Phare selon l'une ou l'autre des revendications 1 et 2, **caractérisé en ce qu'**au moins un tronçon de surface (8) s'étendant de manière irrégulière est réalisé convexe en direction de l'arbre de diaphragme (3) d'un seul tenant.

4. Phare selon l'une des revendications 1 à 3, **caractérisé en ce qu'**au moins un tronçon de surface irrégulier (9) s'étend en oblique par rapport à l'axe de rotation (8) de l'arbre de diaphragme (3) d'un seul tenant.

5. Phare selon l'une des revendications 1 à 4, **caractérisé en ce qu'**au moins une ligne focale respective (4, 7) est symétrique et au moins deux lignes focales (5 et 6) sont asymétriques par rapport à une surface verticale s'étendant en direction de sortie de la lumière, les lignes focales (4, 5, 6 et 7) étant situées, dans leur position optiquement active, dans une surface respective (11, 12) s'étendant à la verticale, dans laquelle s'étend l'axe de rotation (8).

6. Phare selon l'une des revendications 1 à 5, **caractérisé en ce qu'**au moins deux lignes focales (4 et 7) sont réalisées symétriques et au moins deux lignes focales (5 et 6) sont réalisées asymétriques, les lignes focales symétriques et les lignes focales asymétriques étant agencées respectivement au voisinage de l'autre.

7. Phare selon l'une ou l'autre des revendications 5 et 6, **caractérisé en ce qu'**une ligne focale symétrique (4 et 5) et une ligne focale asymétrique (7 et 6), respectivement, sont situées dans une surface respective (11, 12) commune dans laquelle s'étend l'axe de rotation (8).

8. Phare selon la revendication 7, **caractérisé en ce que** deux surfaces (11 et 12), dans lesquelles s'étendent respectivement une ligne focale symétrique (4 et 5) et une ligne focale asymétrique (7 et 6), sont perpendiculaires l'une à l'autre.
